# EUROPEAN PATENT APPLICATION

(11) **EP 1 571 802 A1**
(43) Date of publication of application: **07.09.2005**
(21) Application number: 05101395.1
(22) Date of filing: 24.02.2005
(51) Int. Cl.: H04L 29/06, H04L 12/14

(54) **Collecting accounting information in telecommunications system**

(30) Priority: 04.03.2004 FI 20040353
(71) Applicant: TeliaSonera Finland Oyj, 00510 Helsinki (FI)
(72) Inventor: Ala-Luukko, Sami, 00200, Helsinki (FI); Korhonen, Jouni, 11100, Riihimäki (FI); Järviranta, Juha-Matti, 00790, Helsinki (FI)
(74) Representative: Äkräs, Tapio Juhani

(57) **Abstract**

The present invention illustrates a method for user accounting data management in a wireless telecommunications system comprising one or more access networks, one or more access points (AP), and user equipment. In the method, a connection session for the user equipment is set up via a first access network and a first access point (AP). The method comprises creating and maintaining status data representing the status of each session in a network node, such as an access controller, RADIUS proxy, or RADIUS server (AS). When the network node receives an authentication message, the routine deduces (2-2, 2-6) whether a new authentication or a re-authentication caused by handover or some other reason is concerned. If the authentication in question is re-authentication, additional data is added (2-9, 2-14) to the accounting data or messages to link together the accounting session following the re-authentication and the one preceding it.

## Description

### BACKGROUND OF THE INVENTION

The invention relates to user authentication in a wireless telecommunications system and particularly to an enhanced accounting process in connection with channel handover and re-authentication.

In wireless local area networks (WLAN) transmission paths are implemented using wireless connections. A WLAN network is typically part of a larger network through an interface to a wired local area network (LAN), for instance. The connection to the wired local area network is provided by means of access points (AP), which may also be called base stations or authenticators. The IEEE 802.11 standard for wireless local area networks defines what is known as the shared key authentication method. It is based on a challenge-response sequence between a terminal and a base station and on the use of a wired equivalent privacy (WEP) key. However, an intruder may capture the challenge-response sequence and find out the WEP key. Moreover, user authentication based on WEP keys is not very well suitable for public WLAN services.

IEEE 802.1X standard was developed with a view to improving data security in local area networks, and IEEE 802.11i standard has been developed to improve the data security of WLAN in particular. Compared with the IEEE 802.11 standard, a new feature in them is the extensible authentication protocol (EAP), for instance. WLAN authenticates the user by means of the EAP, which offers various means for verifying the parties involved in a wireless network. In practice EAP messages are encapsulated into remote authentication dial-in user service (RADIUS) messages. RADIUS provides client-server-based protocol for identification, access control, transmission of setting data, focusing of IP (Internet Protocol) addresses, and for compiling user statistics. A WLAN system may thus include several clients and servers, possible also ones that use some other protocol than RADIUS. Another way in which IEEE 802.1X and IEEE 802.11i aim at improving data security is the possibility to force the user perform re-authentication at regular intervals, which enables the WEP key to be renewed.

During a session the user equipment (i.e. the supplicant) may roam within the area of several base stations, which means that EAP authenticator handover is required, and a connection must be set up to a new base station. In this case re-authentication must be carried out during the same session. In addition, a WLAN capable of applying IEEE 802.11i/802.1X may require that the terminal be re-authenticated at regular intervals even when the supplicant remains within the area of the same base station. In connection with EAP authenticator handover the supplicant is re-authenticated, and, due to the characteristics of the RADIUS protocol, a new accounting session is created. Each re-authentication may cause a new accounting session to be created, particularly in cases where the RADIUS authentication and the related accounting take place in different places. The supplicant only experiences one session although several accounting sessions are carried out and therefore a two-hour session, for example, is shown on the supplicant's invoice as four half-hour sessions.

Prior art knows methods for linking together accounting and authentication sessions. For example, the authenticator server, typically a RADIUS server, transmits during the authentication the same class attribute to all authentication sessions of the same supplicant session, and the network element generating the accounting copies the attribute to the accounting messages, thus allowing accounting messages belonging to the same session to be identified.

On the other hand, the EAP authenticator may take care of the necessary hiding and linking of re-authentications. This is based on the fact that the authenticator generating both the authentication and the accounting messages knows that re-authentication is concerned and does not interrupt an ongoing accounting session.

Accounting sessions created in EAP authenticator handover can be correlated with each other by means of a RADIUS Acct-Multisession-Id attribute, which is added to all accounting messages of the same supplicant session. In that case the EAP authenticators must be capable of transferring the attribute from one EAP authenticator to another in connection with the EAP authenticator handover. Accounting messages of the same session can then be identified on the basis of the attribute. For this purpose, an IAPP (Inter Access Point Protocol) standard (IEEE 802.11f) has been defined for WLAN devices supporting IEEE 802.1X. The Acct-Multisession-Id attribute requires the authenticator to provide an exact time, which is obtained by means of an NTP (Network Time Protocol), for instance.

In addition, it is possible to use proprietary attributes and to add intelligence to post-processing to enable different accounting and authentication sessions to be joined together.

A problem with the above arrangements is that in practice a wireless local area network comprises not only authenticators according to IEEE 802.1X but also older base stations conforming to the IEEE 802.11. Due to differing details of implementation of EAP authenticators and network nodes generating accounting messages, correlation between accounting and authentication sessions is not a trivial problem.

For example, the class attribute may be quite freely used, and manufacturers of RADIUS servers use it for various purposes. In connection with network roaming, for instance, the visited network does not necessarily understand the class attribute transmitted by the user's home location network and therefore, according to the RADIUS protocol specifications, it should not react to the attribute. Currently used practical implementations do not apply this method either. For example, when SIM (Subscriber Identity Module) authentication developed for mobile stations is applied in WLAN (known as EAP-SIM/AKA (Authentication and Key Agreement) method) in connection with re-authentication, the class attribute probably changes. Moreover, adding the class attribute does not enable to identify or hide channel handovers.

If the EAP authenticator is to take care of the necessary hiding and linking of re-authentication sessions, the EAP authenticator in question must carry out both accounting and authentication. The EAP authenticator also has to support this functionality, which most often is not the case. Moreover, an EAP authenticator is not capable of hiding channel handovers if authenticators do not distribute status data among them by means of IAPP, for example.

A problem with the RADIUS Acct-Multisession-Id attribute, in turn, is that EAP authenticators must be capable of transferring the attribute in connection with channel handover from one EAP authenticator to another. However, WLAN devices do not necessarily support IAPP and since the contents of IAPP messages are not standardized, the EAP authenticators of different manufacturers do not always understand each other. A further problem is that the exact time required by the Acct-Multisession-Id attribute is not necessarily available in all authenticators. Most WLAN base stations, for example, do not contain NTP support.

If proprietary attributes are used, or intelligence is added to post-processing, problems arise from poor compatibility on a global scale and from degraded real-time operation.

### BRIEF DESCRIPTION OF THE INVENTION

It is therefore an object of the invention to provide a method and equipment implementing the method to allow the above problems to be solved.

The object of the invention is achieved by a method, network node, and wireless local area network, characterized by what is stated in the independent claims. The preferred embodiments of the invention are disclosed in the dependent claims.

A basic idea of the invention is that if the EAP authenticator is incapable of adding a re-authentication and/or EAP authenticator handover attribute to messages relating to accounting in connection with re-authentication and/or EPA authenticator handover, the attribute is generated in some other network node. In that case the network node generating the attribute is a node that is hierarchically higher in the network configuration than the EAP authenticator, such as an access controller, RADIUS proxy, and/or RADIUS server. In the network node, a status in which the attributes can be stored is created for the user's session. The method comprises identifying any EAP authenticator handovers and/or supplicant re-authentications taking place during a session by comparing received authentication and accounting messages with the status reserved for the session.

In connection with re-authentication, an attribute indicating the time of an event (such as an Event-Timestamp attribute) is added in the network node, such as the access controller, to messages relating to accounting. From the attribute accounting periods relating to the same session can be deduced, even if a re-authentication had taken place during the session.

The attribute indicating channel handover that is to be added to messages relating to accounting in connection with EAP authenticator handover in a network node, such as an access controller, is an Acct-Multisession-Id attribute, for example, on the basis of which accounting data relating to the same session can be linked together, even if EAP authenticator handover had taken place during the session.

An advantage of the method and system of the invention is that it solves problems relating to re-authentication and EAP authenticator handovers that appear in RADIUS accounting in IEEE 802.1X networks. The invention determines rules for linking together authentication and accounting sessions at a significantly greater precision. The invention also determines how EAP authenticator handovers can be detected at the RADIUS server and how accounting sessions in connection with EAP authenticator handover can be combined even though an apparently new accounting session must be created due to the handover. This method for hiding the EAP authenticator handover also functions in connection with EAP authenticators that do not support such hiding and also in cases where the network contains equipment provided by different manufacturers. The invention does not require new functionality to be added to base stations. In addition, it allows messaging relating to authentication sessions to be reduced, thus reducing network load.

### BRIEF DESCRIPTION OF THE INVENTION

In the following, the invention will be described in greater detail in connection with preferred embodiments and the accompanying drawings, in which
Figure 1 illustrates a system of the invention;
Figure 2 illustrates signalling according to the invention;
Figure 3 is a simplified flow diagram of an embodiment of the invention.

### DETAILED DESCRIPTION OF THE INVENTION

In the following, preferred embodiments of the invention are disclosed with reference to a local area network conforming to the IEEE 802.11 and/or IEEE 802.1X standards and employing a RADIUS protocol for accounting. The invention is not, however, to be restricted to these embodiments alone. On the contrary, it can be applied in any wireless telecommunications system applying user authentication and accounting session management. The RADIUS protocol can be replaced by some other protocol, and the invention can also be applied to networks of other type. The wireless local area network may be a BRAN (Broadband Radio Access Network) standard network or a Bluetooth network. Rapid development of telecommunications system specifications may require some additional changes to the invention. For this reason all terms and expressions used herein should be interpreted in their broadest sense, because they are meant to illustrate and not to restrict the invention. The essential aspect of the invention is the functionality and not the network element or equipment used for executing it.

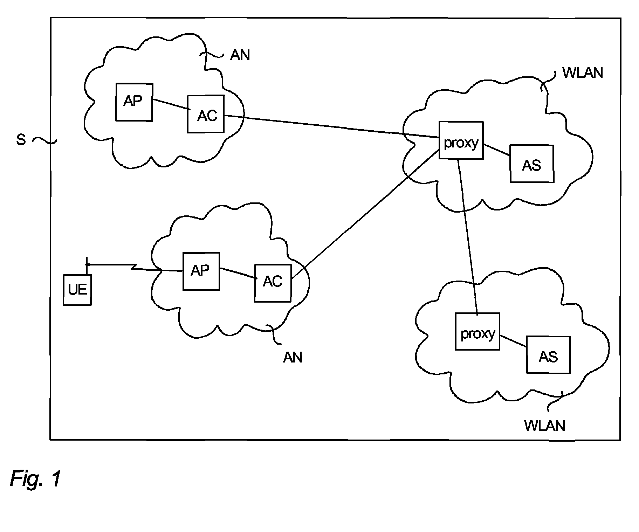

With reference to Figure 1, a system S comprises at least one wireless local area network core network WLAN comprising an authentication server AS, which is typically a RADIUS server. One of the networks is the user's home location network, the server authenticating the user equipment UE thus being the AS of the home location network. A connection from the user equipment UE to the authentication server AS is set up via a base station AP, also known as an authenticator, an access controller AC, and a RADIUS proxy. AC and AP are part of an access network AN. The user equipment is typically connected to the base station currently closest to it. In the situation of Figure 1 the base station AP may be an IEEE 802.1X standard authenticator of a more recent type that applies an EAP protocol in authentication, or an IEEE 802.11 standard base station of an older type, in which authentication is mainly based on a WEP key, or it is not carried out on the IEEE 802.11 level at all (but on a higher level). The user of WLAN may also gain access to external networks N.

The access controller AC is the gateway between the access network AN and the core network WLAN. The RADIUS proxy is a proxy server transmitting user authentication requests to the authentication server for validating the requests. The RADIUS proxy can be utilized in connection with network roaming. The access controller AC and the RADIUS proxy may also be combined into a single server. The server to which the authentication request is transmitted is selected on the basis of an Authentication Realm that may be determined either in the RADIUS proxy or the authentication server AS.

A WLAN operator provides wireless, IP-based services allowing the users to move about in different, typically heavily loaded areas, such as hotels, airports, etc. In the WLAN network, a wireless connection is set up between WLAN base stations AP and the user equipment UE without a separate physical transmission path. Radio waves serve as carriers to which the data to be transmitted is attached by means of modulation. The users may contact the network by means of WLAN adapters, which are cards STA inserted into the user equipment or fixedly integrated into the equipment. The card comprises a transmitter and a receiver for setting up a radio connection to a base station.

The WLAN user equipment UE may be a portable computer, for example, that has a WLAN adapter card STA comprising a smart card in-stalled therein. The user equipment UE may also comprise a mobile station part for communicating with UMTS networks. SIM or for example USIM (UMTS Subscriber Identity Module), used in UMTS networks, contains the subscriber identity IMSI (International Mobile Subscriber Identity) that represents the subscriber in the network. The information on the SIM is used for identifying the subscriber and for ciphering radio traffic.

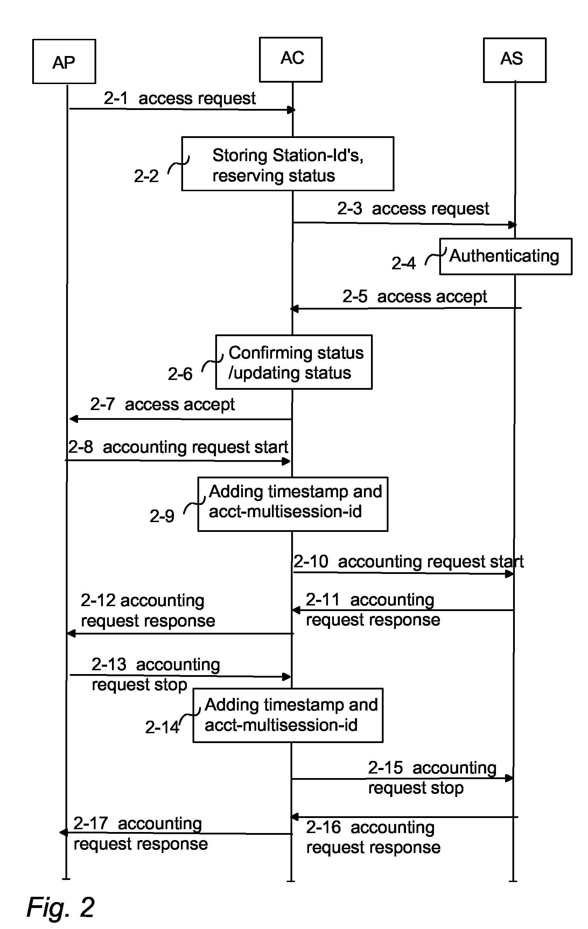

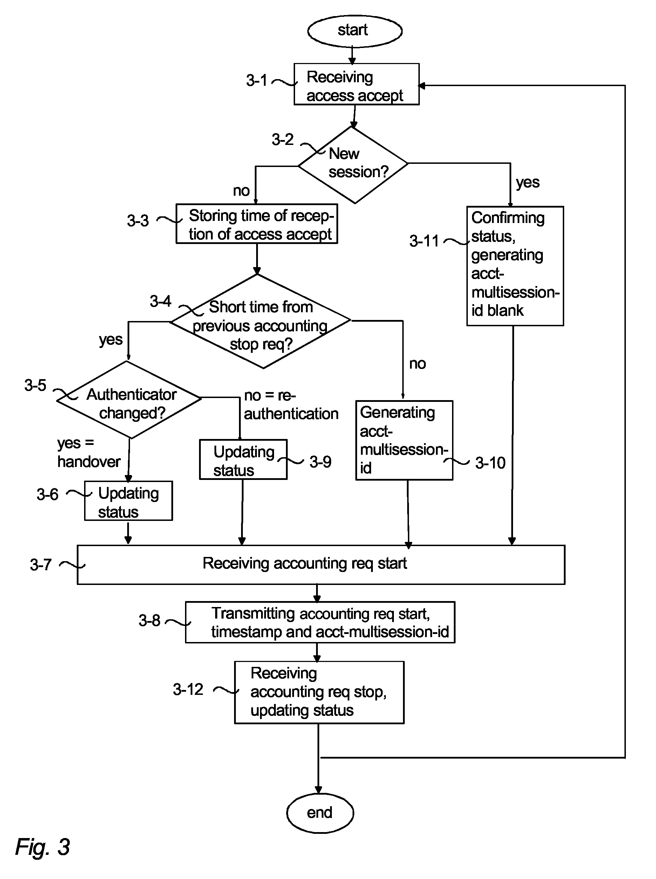

Figure 2 illustrates signalling according to an embodiment of the invention in a situation in which an authentication request (access request message) 2-1 sent by the base station AP is received at a network node proxy responsible for authentication and/or accounting. Correspondingly, Figure 3 illustrates a flow diagram of an embodiment of the invention in a situation in which an authentication response (access accept message) 2-5 sent by the base station AP is received 3-1 in the network node proxy responsible for authentication and/or accounting. The network node responsible for authentication and/or accounting may be the access controller AC, the RADIUS proxy, or the RADIUS server AS. When roaming is concerned, the network node is the RADIUS proxy or the RADIUS server AS. In the following it is assumed that the network node is RADIUS proxy.

With reference to Figures 2 and 3 the base station AP sends the RADIUS proxy (for example via the access controller AC, not shown in Figure 2) an access request message 2-1 containing an authentication request. The authentication request comprises user equipment identification data (Calling-Station-Id), such as a MAC (Media Access Layer) address of the user equipment, and base station identification data (Called-Station-Id), such as a MAC address of the base station. In addition, the authentication request comprises information about the IP address of the base station (NAS-IP-Address). The Station-Id attributes in the authentication request may be used for finding the status data of a particular session. In step 2-2, a status is reserved for the session if there is none yet. The access request is then transmitted 2-3 to the RADIUS server in the home location network of the user equipment. In addition, the RADIUS proxy may also store the message. In step 2-4 the RADIUS server authenticates the user equipment. Information about accepted authentication is transmitted in an access accept message 2-5. In this connection, the class attribute may be supplied, and the supplicant's status is checked in step 2-6.

The routine then proceeds to step 3-2 to check whether the session is a new one, i.e. whether a status has already been created for the session in the RADIUS proxy in step 2-2. The supplicant's status may include the following: NAS-IP-Address, Calling-Station-Id, Called-Station-Id, Acct-Session-Id, Event-Timestamp. The Acct-Session-Id attribute identifies an individual accounting period.

If a new session is concerned, the RADIUS proxy updates the status by storing the time of arrival of the access accept message in step 3-3. The time is compared in step 3-4 with the time a previous accounting request stop message relating to the session in question was received at the RADIUS proxy, the base station using the message for requesting interruption of an accounting period due to terminated session, re-authentication, or EAP authenticator handover.

If the previous accounting request stop message was received only a very short time ago, the session in question is a continued ongoing session. The attribute in the access accept message is then checked in step 3-5 by comparing the NAS-IP-Address attribute with the attribute stored in the status. If the NAS-IP-Address is different than the one in the previous authentication concerning the same session, EAP authenticator handover has taken place (and the base station AP has changed). Therefore the status data relating to the session must be updated in step 3-6, i.e. the NAS-IP-Address of the new base station and the time of arrival of the access accept message stored in step 3-3 are stored.

The accepted authentication request is then acknowledged by an access accept message 2-7. In step 3-7 the RADIUS proxy receives from the base station accounting request start message 2-8, i.e. a request to start accounting. If the message does not contain an Event-Timestamp, the RADIUS proxy generates it in step 2-9, 3-8 by means of NTP and adds it to message 2-10 before transmitting the message to the RADIUS server. If accounting request start message 2-8 received at the RADIUS proxy does not contain the Acct-Multisession-Id attribute of the session in question to allow accounting periods relating to the same session to be identified regardless of the EAP authenticator handover, the RADIUS proxy retrieves the attribute and adds it to accounting request start message 2-10 in step 2-8, 3-8 before the message is transmitted to the RADIUS server.

If no handover of base station AP is detected in step 3-5, the event in question is re-authentication relating to an ongoing session. In that case the status is updated in step 3-9 with the time of arrival of the access accept message stored in step 3-3. Accepted authentication is acknowledged by access accept message 2-7. In step 3-7 the RADIUS proxy receives from the base station accounting request start message 2-8. If the message in question does not contain an Event-Timestamp, the RADIUS proxy generates it in step 2-9, 3-8 by means of NTP and adds it to accounting request start message 2-10 before transmitting the message to the RADIUS server AS. The Event-Timestamp enables to track accounting periods belonging to the same session, regardless of the re-authentication occurred, because messages relating to the same accounting period are created within a short time from the previous message. If accounting request start message 2-8 received at the RADIUS proxy does not contain an Acct-Multisession-Id attribute, the RADIUS proxy retrieves the attribute from its memory and adds it in step 2-9, 3-8 to accounting request start message 2-10 before transmitting the message to the RADIUS server AS.

If a long time has elapsed from the previous accounting request stop message in step 3-4, the session in question is a new one. In step 3-10 the RADIUS proxy generates an Acct-Multisession-Id attribute using the Calling-Station-Id, the Called-Station-Id, and the time of arrival of the access accept message stored in step 3-3, and stores the attribute. Accepted authentication is acknowledged by access accept message 2-7. In step 3-7 the RADIUS proxy receives from the base station accounting request start message 2-8. If the message in question does not contain an Event-Timestamp, the RADIUS proxy generates it in step 2-9, 3-8 by means of NTP and adds it to message 2-10 before transmitting the message to the RADIUS server. The Event-Timestamp enables to track accounting periods belonging to the same session if re-authentication takes place during the session. In step 3-8 the RADIUS proxy retrieves an Acct-Multisession-Id and adds it in step 2-9, 3-8 to accounting request start message 2-10 before transmitting the message to the RADIUS server. The Acct-Multisession-Id enables to track accounting periods belonging to the same session if EAP authenticator handover takes place du ring the session.

If there is no status for the session in step 2-2, the RADIUS proxy reserves status for the session in step 3-11. The RADIUS proxy also generates an Acct-Multisession-Id attribute blank by means of the Calling-Station-Id and the Called-Station-Id, and stores the blank. Accepted authentication is acknowledged by access accept message 2-7.

In step 3-7 the RADIUS proxy receives from the base station AP an accounting request start message 2-8. If the message does not contain an Event-Timestamp, the RADIUS proxy generates it in step 2-9, 3-8 by means of NTP, stores it in the session status, and adds it to message 2-10 before transmitting the message to the RADIUS server AS. The Event-Timestamp enables to track accounting periods belonging to the same session if re-authentication takes place during the session. The RADIUS proxy generates the Acct-Multisession-Id in step 3-8 by means of the Acct-Multisession-Id blank and adds it to accounting request start message 2-10 in step 2-9, 3-8 before transmitting the message to the RADIUS server.

The request for starting an accounting period, accounting request start 2-10, is acknowledged by accounting request response messages 2-11 and 2-12. In step 2-14, 3-12 the RADIUS proxy receives accounting request stop message 2-13 sent by AP to request interruption of the accounting period. The base station requests that the accounting period be interrupted due to terminated session, re-authentication or authenticator handover. If the message in question does not contain an Event-Timestamp, the RADIUS proxy generates one in step 2-14, 3-12, stores it in the session status, and adds it to message 2-15 before transmitting the message to RADIUS server AS. If the accounting request stop message 2-13 received at the RADIUS proxy does not contain the Acct-Multisession-Id attribute of the session in question for identifying accounting periods belonging to the same session, the RADIUS proxy retrieves the attribute and adds it to accounting request stop message 2-15 in step 2-14, 3-12 before the message is transmitted to the RADIUS server AS. A request for interruption is acknowledged by means of messages 2-16 and 2-17.

After this the RADIUS proxy may receive a new authentication request access request 2-1, from the base station AP. In that case the process starts again from the beginning in step 3-1 when the RADIUS proxy receives a corresponding access accept message. It is also possible to terminate the process after step 3-12 for example if a new access request message relating to the same session is not received within a predetermined period. The session status becomes outdated and it is removed after a specific time if new event relating to the status do not emerge.

Re-authentication can be distinguished from a completely new authentication in that in connection with re-authentication the NAS-IP-Address in the access request message has not changed since the previous authentication. Moreover, in that case authentication takes place within a very short time after the accounting session has terminated (i.e. after the accounting request stop message has been sent).

A single session may comprise one or more subsequent accounting periods. Accounting periods relating to one and the same session can be identified in a stateful network node, because in them the Event-Timestamps indicating the termination of a previous accounting period and the beginning of a next one are temporally very close to each other. In this context, a stateful element, for example, refers to an element having a status.

The NTP time should be generated in the EAP authenticator (i.e. at the base station), but in authenticators of an older type this is not possible. Instead, the NTP time is generated in a stateful access controller AC or RADIUS proxy. In connection with authentication, the stateful access controller AC or RADIUS proxy generates the Acct-Multisession-Id. This way a stateful access controller AC or RADIUS proxy is able to add the Acct-Multisession-Id to all accounting messages, and thus no IAPP or Acct-Multisession-Id support is required from EAP authenticators. The same stateful element must also be able to detect channel handovers so as not to generate a new Acct-Multisession-Id for itself in connection with every handover. The accounting logic of the system uses the generated Acct-Multisession-Id for linking together accounting periods even though handover has taken place and a new accounting period has had to be created. The accounting periods may be linked together in the access controller, RADIUS proxy, or RADIUS server, either in the visitor location network or in the home location network of the user equipment UE.

According to yet another embodiment of the invention, the functionality of the invention is implemented in a network node closest to the base station in the network configuration, for example in the access controller.

According to yet another embodiment, the accounting periods are linked together in the invention later, in the accounting system.

According to yet another embodiment, a procedure known as accounting session masking is carried out. In this case the RADIUS proxy does not let accounting messages generated by the EAP authenticator pass to the authenticator server (except the first accounting request start message and the last accounting request stop message), but initiates itself the accounting session when a user session begins and terminates the session when the RADIUS proxy (or the EAP authenticator) considers that the user session ends.

The signalling messages and steps shown in Figures 2 and 3 are simplified and only aim at depicting the inventive idea. Other signalling messages may be sent, and other operations may be executed between the messages and/or the steps, and the order of execution of the messages and/or the steps may vary from the one given above. The signalling messages given here are only examples, and they may contain only some of the above identified data. On the other hand, they may also contain other data, and their names may vary form the ones given above.

The above inventive functionalities may be implemented by software in processors included in the user terminal UE and the network elements (AP, AC, RADIUS proxy, and/or RADIUS server). It is also possible to use hardware-based solutions, such as Application Specific Integrated Circuits (ASIC), or discrete logic.

It is apparent to a person skilled in the art that as technology advances, the basic idea of the invention can be implemented in various ways. The invention and its embodiments are therefore not restricted to the above examples but may vary within the claims.

## Claims

1. A method for user accounting data management in a wireless telecommunications system (S) comprising:
one or more access networks (AN);
one or more access points (AP); and
user equipment (UE),
in which method a connection session is set up for the user equipment (UE) via a first access network (AN) and a first access point (AP),
**characterized in that** the method comprises
creating and maintaining, in a network node, status data representing the status of each connection session, the network node being hierarchically above the access point of the access network, the status data comprising a selected group of attributes;
receiving, at the network node, an authentication message relating to the authentication of the user equipment (UE);
deducing on the basis of the authentication message received at the network node and the status data whether a new authentication, or re-authentication caused by handover or some other reason, is concerned;
adding additional information to the accounting data or messages to link together the accounting session following the re-authentication and the one preceding it, if re-authentication during one and the same connection session is concerned.

2. A method according to claim 1, **characterized by** comprising
providing the connection session with a multi-accounting identifier in the network node that is hierarchically above the access point of the access network;
creating and maintaining in the network node status data representing the status of the connection session of the user equipment (UE), the status data comprising at least one attribute identifying the connection session, at least one attribute identifying the current access point, a timestamp for the beginning and/or the end of the accounting session, and a multi-accounting identifier;
receiving at the network node an authentication message relating to the authentication of the user equipment (UE), the authentication message containing at least one attribute identifying the connection session and at least one attribute identifying the access point that sent the authentication message;
determining, on the basis of the time of the authentication message, the attributes contained therein, and the attributes of the status data of the connection session concerned, whether a new authentication, or re-authentication caused by handover or some other reason is concerned, and,
if re-authentication is concerned, using in the accounting session following the authentication the current multi-accounting identifier of the status data to indicate that the accounting session preceding the authentication and the one following it are inter-related; and
if new authentication is concerned, providing the accounting session following the authentication with a new multi-accounting identifier to distinguish the accounting session preceding the authentication and the one following it from one another.

3. A method according to claim 1 or 2, **characterized by** comprising determining that the authentication message is caused by handover, if the attribute contained in the authentication message and identifying the access point that sent the authentication message, and the attribute contained in the status data and identifying the current access point differ from one another; and
updating the attribute identifying the current access point in the status data.

4. A method according to any one of claims 1 to 3, **characterized by** comprising
determining that the authentication message is caused by a periodic re-authentication, if the attribute contained in the authentication message and identifying the access point that sent the authentication message and the attribute contained in the status data and identifying the current access point correspond to each other, and the time between the time of the authentication message and the termination timestamp possibly included in the status data does not exceed a predetermined limit value.

5. A method according to any one of claims 1 to 4, **characterized by** comprising determining the authentication message to represent a new authentication, if the attribute contained in the authentication message and identifying the access point that sent the authentication message and the attribute contained in the status data and identifying the current access point correspond to each other, and the time between the time of the authentication message and the accounting termination timestamp possibly included in the status data exceeds a predetermined limit value.

6. A method according to any one of claims 1 to 5, **characterized by** determining that the authentication message represents a new authentication, if there is no status data for the connection session in the network node.

7. A method according to any one of claims 1 to 6, **characterized in that** the additional data or the multi-accounting identifier comprise the user equipment identifier, the identifier of the access point functioning as an authenticator, and the NTP (Network Time Protocol) starting time generated by the network node for the first accounting session.

8. A method according to claim 7, **characterized in that** the authentication message is a RADIUS protocol access request and that the additional data or the multi-accounting identifier comprise a Calling-Station-Id attribute and a Called-Station-Id attribute received in the authentication message as well as the NTP (Network Time Protocol) starting time generated by the network node for the first accounting session.

9. A method according to any one of the preceding claims, **characterized in that** the network node comprises one of the following: an access controller (AC), a RADIUS proxy server (proxy), a RADIUS server (AS).

10. A network node in a wireless telecommunications system (S) for managing the accounting of a connection session of user equipment (UE), the connection session being set up via a first access network (AN) and a first access point (AP), **characterized in that** the network node is hierarchically above the access point of the access network and comprises
means for creating and maintaining status data representing the status of each connection session, the status data comprising a selected group of attributes;
means for receiving an authentication message relating the authentication of the user equipment (UE);
means for deciding, on the basis of the received authentication message and the status data, whether new authentication, or re-authentication caused by handover or some other reason, is concerned;
means for adding to the accounting data and messages additional information that links together the accounting session following the re-authentication and the one preceding if re-authentication during one and the same connection session is concerned.

11. A network node according to claim 10, **characterized in that** it comprises
means for providing the connection session with a multi-accounting identifier in a network node that is hierarchically above the access point of the access network;
means for creating and maintaining status data representing the status of the connection session of the user equipment (UE), the status data comprising at least one attribute identifying the connection session, at least one attribute identifying the current access point, a timestamp for the beginning and/or termination of the accounting session, and a multi-accounting identifier;
means for receiving an authentication message relating to the authentication of the user equipment (UE), the message containing at least one attribute identifying the connection session and at least one attribute identifying the access point that sent the authentication message;
means for determining, on the basis of the time of the authentication message, the attributes contained therein, and the attributes of the status data of the connection session, whether a new authentication or re-authentication caused by handover or some other reason is concerned; and
means for using, in the case of re-authentication, the current multi-accounting identifier of the status data in the accounting session following the authentication to indicate that the accounting session preceding the authentication and the one following it are inter-related, and which, in the case of a new authentication, provide the accounting session following the authentication with a new multi-accounting identifier for distinguishing the accounting session preceding the authentication and the one following it from one another.

12. A network node according to claim 10 or 11, **characterized in that** the determining means are configured to determine that an authentication message is caused by handover, if the attribute contained in the message and identifying the access point that sent the message, and the attribute contained in the status data and identifying the current access point differ from one another, and to update the attribute identifying the current access point in the status data.

13. A network node according to any one of claims 10 to 12, **characterized in that** the determining means are configured to determine that the authentication message is caused by a periodic re-authentication, if the attribute contained in the message and identifying the access point that sent the message, and the attribute contained in the status data and identifying the current access point correspond to one another, and the time between the time of the authentication message and the termination timestamp possibly contained in the status data does not exceed a predetermined limit value.

14. A network node according to any one of claims 10 to 13, **characterized in that** the determining means are configured to determine the authentication message as a new authentication, if the attribute contained in the message and identifying the access point that sent the message, and the attribute contained in the status data and identifying the current access point correspond to each other, and the time between the time of the authentication message and the accounting termination timestamp possibly contained in the status data exceeds a predetermined limit value.

15. A network node according to any one of claims 10 to 14, **characterized in that** the determining means are configured to determine the authentication message as a new authentication, if there is no status data for the connection session in the network node.

16. A network node according to any one of claims 10 to 15, **characterized in that** the additional data or multi-accounting identifier comprises a user equipment identifier, an identifier for an access point functioning as the authenticator, and the NTP time generated by the network node and indicating the beginning of the first accounting session.

17. A network node according to claim 16, **characterized in that** the authentication message is a RADIUS protocol access request and that the additional data or multi-accounting identifier comprises a Calling-Station-Id attribute and a Called-Station-ld attribute received in the authentication message as well as the NTP (Network Time Protocol) time generated by the network node for the beginning of the first accounting session.

18. A network node according to any one of claims 10 to 17, **characterized in that** the network node comprises one of the following: an access controller (AC), a RADIUS proxy server (proxy), a RADIUS server.

19. A network node according to any one of claims 10 to 18, **characterized in that** the network node is in a wireless local area network.

20. A network node according to any one of claims 10 to 19, **characterized in that** the access point is a base station in a wireless local area network or some other network element functioning as an authenticator.

21. A wireless local area network comprising an access network that has base stations or other access points, and a core network that has an access controller, a RADIUS proxy server, and/or a RADIUS server serving a plural number of access points, **characterized in that** the access point, RADIUS proxy server, or RADIUS server comprises a connection session set up to user equipment (UE) via a first access network (AN) and a first access point (AP) for accounting management,
means for creating and maintaining status data representing the status of each connection session, the status data comprising a selected group of attributes;
means for receiving an authentication message relating to the authentication of the user equipment (UE);
means for deducing on the basis of a received authentication message and the status data whether a new authentication or re-authentication caused by handover or some other reason is concerned;
means for adding to the accounting data or messages additional data that links together an accounting session following re-authentication and an accounting session preceding it, when the authentication is a re-authentication taking place during one and the same connection session.
